# EUROPEAN PATENT APPLICATION

(11) **EP 1 694 069 A1**
(43) Date of publication of application: **23.08.2006**
(21) Application number: 04793121.7
(22) Date of filing: 28.10.2004
(51) Int. Cl.: H04N 7/173, H04N 7/18, H04B 7/26

(54) **NETWORK SYSTEM AND DATA DISTRIBUTION SERVICE PROVIDING METHOD**

(30) Priority: 19.11.2003 JP 2003389316
(71) Applicant: NEC CORPORATION, Minato-ku, Tokyo 108-8001 (JP)
(72) Inventor: OMURA, Michiaki, Tokyo 1088001 (JP); OZAWA, Kazunori, Tokyo 1088001 (JP)
(74) Representative: Vossius & Partner
(86) International application number: PCT/JP2004/016013
(87) International publication number: WO 2005/062615

(57) **Abstract**

A network system according to the present invention has portable terminals (10₁, 10₂) connectable to a network, a distribution server (4) for distributing video and/or audio data to the portable terminals (10₁, 10₂) through the network, and a storage server (5) for storing a message of video and/or audio contents when the message is sent from the portable terminals (10₁, 10₂) to the network in response to the data distributed from the distribution server (4).

## Description

### TECHNICAL FIELD:

The present invention relates to a network system and a data distribution service providing method for providing a distribution service for distributing video and/or audio data to an information terminal such as a portable terminal, a personal computer, or the like, and providing an uploading service for uploading a video and/or audio message in response to data distributed by the distribution service.

Particularly, the present invention is concerned with a network system and a data distribution service providing method for providing, to an information terminal, a distribution service for distributing real-time video and/or audio data representing various events occurring in event sites which include wedding ceremonies, celebrations, exhibitions, etc.

### BACKGROUND ART:

At present, there are distribution services for distributing data such as live video data or the like to portable terminals with a TV telephone function. According to a certain distribution service, the server collects live video data captured by a camera at an event site such as a wedding center and distributes the collected data to portable terminals.

The above distribution service is, however, problematic in that though the downlinks of portable terminals are effectively utilized, the uplinks of portable terminals are not effectively utilized except that only data for keeping the portable terminals connected are flowing through their uplinks (stuffing data according to ITU-T (International Telecommunication Union-Telecommunication sector) Recommendations H.223).

### DISCLOSURE OF THE INVENTION:

It is an object of the present invention to provide a network system and a data distribution service providing method which are capable of effectively utilizing not only the downlinks, but also the uplinks, of information terminals such as portable terminals or the like.

To achieve the above object, a network system according to an aspect of the present invention has an information terminal connectable to a network, a distribution server for distributing video and/or audio data to the information terminal through the network while the information terminal is being connected to the network, and a storage server for storing a message of video and/or audio contents when the message is sent from the information terminal to the network in response to the data distributed from the distribution server while the information terminal is being connected to the network.

With this arrangement, the user of the information terminal can not only browse data (e.g., video data and audio data of a wedding ceremony) distributed from the distribution server through the downlink of the information terminal, but also upload a message (e.g., a celebration message for the bride and groom) in response to the distributed data through the uplink of the information terminal to the storage server.

To achieve the above object, a network system according to another aspect of the present invention has a first information terminal and a second information terminal which are connectable to a network, a distribution server for distributing video and/or audio data to the second information terminal through the network while the second information terminal which is designated as a distribution destination by the first information terminal is being connected to the network, and a storage server for storing a message of video and/or audio contents when the message is sent from the second information terminal to the network in response to the data distributed from the distribution server while the second information terminal is being connected to the network.

With this arrangement, the user of the first information terminal can distribute data from the distribution server to the second information terminal that is positioned in another location. In this case, the user of the second information terminal also can not only browse the data distributed from the distribution server through the downlink of the second information terminal, but also upload a message in response to the distributed data through the uplink of the second information terminal to the storage server.

The network system may further have image capturing/sound collecting means installed in a predetermined location for capturing images and/or collecting sounds of the predetermined location to produce the data, and the distribution server may distribute the data produced by the image capturing/sound collecting means through the network to the information terminal in real time.

With this arrangement, the user of the information terminal can browse in real time data (e.g., video data and audio data of a wedding ceremony) produced by capturing images and collecting sounds with the image capturing/sound collecting means.

The network system may further have a gateway device for sending the message from the information terminal through the network to the storage server after the gateway device has detected a signal representing a start of transmission of the message sent from the information terminal until the gateway device detects a signal representing an end of transmission of the message sent from the information terminal, and the storage server may have receiving means for receiving the message sent from the gateway device through the network, and storing means for storing the message received by the receiving means.

With this arrangement, the user of the information terminal can store a message in the storage server simply by sending a signal (e.g., PB sounds of the information terminal, etc.) representing a start of transmission of the message or an end of transmission of the message.

The storage server may have transmitting means for sending the message stored by the storing means to the network.

With this arrangement, a message stored in the storage server can be sent to a display unit (e.g., a monitor installed in a wedding center) to display the message at a predetermined time (e.g., at a time for presenting celebration telegrams in a wedding ceremony).

The storage server may also have display means for displaying the message stored by the storing means.

With this arrangement, the storage server can be installed in a predetermined location (e.g., a wedding center), and display a message stored in the storage server at a predetermined time (e.g., at a time for presenting celebration telegrams in a wedding ceremony).

### BRIEF DESCRIPTION OF THE DRAWINGS:

Fig. 1 is a view showing the configuration of a network system according to an embodiment of the present invention;

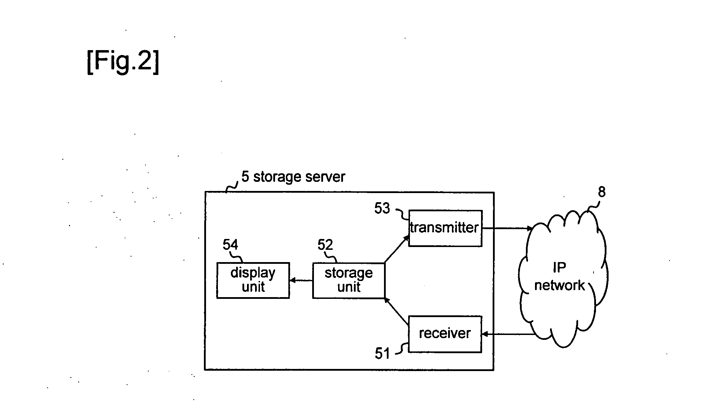

Fig. 2 is a block diagram showing the configuration of a storage server shown in Fig. 1;
Fig. 3 is a flowchart of an operation sequence of the network system shown in Fig. 1 for the user of a portable terminal to use a data distribution service; and
Fig. 4 is a flowchart of an operation sequence of the network system shown in Fig. 1 for the user of a portable terminal to use a message uploading service.

### BEST MODE FOR CARRYING OUT THE INVENTION:

The best mode for carrying out the invention will be described below with reference to the drawings. A network system according to the present invention will be described with respect to its functions to provide a distribution service for distributing real-time video and/or audio data obtained by capturing images and collecting sounds of wedding ceremonies and wedding receptions and also to provide an uploading service for uploading a message in response to data distributed by the distribution service. For the sake of convenience, wedding ceremonies and wedding receptions will hereinafter be referred to as wedding ceremonies, and wedding centers and wedding reception halls as wedding centers.

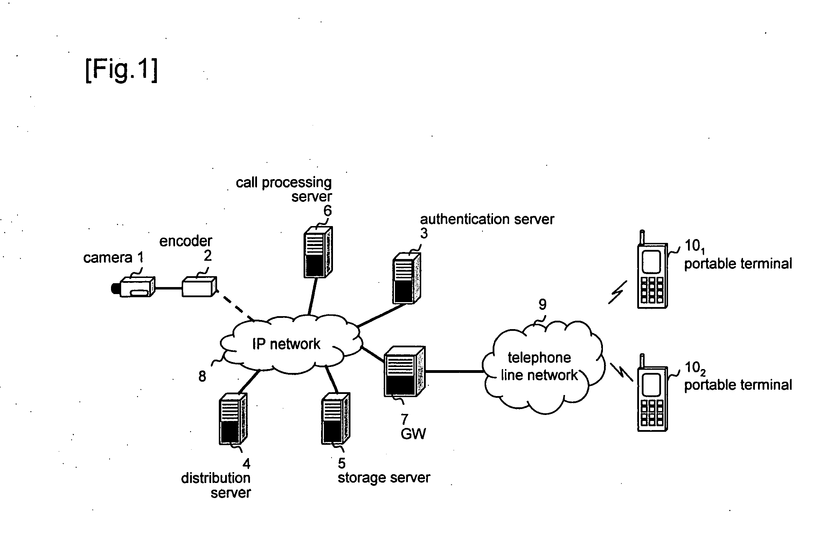

As shown in Fig. 1, a network system according to an embodiment of the present invention has camera 1, encoder 2, authentication server 3, distribution server 4, storage server 5, call processing server 6, GW (gateway) 7, IP (Internet Protocol) network 8, telephone line network 9, and portable terminals 10₁, 10₂.

Authentication server 3, distribution server 4, storage server 5, and call processing server 6 are connected to IP network 8. Encoder 2 can also be connected to IP network 8 according to a call processing process performed by call processing server 6. GW 7 for line switching between IP network 8 and telephone line network 9 is also connected to IP network 8. Telephone line network 9 includes an ISDN (Integrated Services Digital Network) network, a PDC (Personal Digital Cellular) network, and a 3G (3rd Generation) network, etc. Portable terminals 10₁, 10₂ can also be connected to IP network 8 through telephone line network 9 according to a call processing process performed by call processing server 6.

Camera 1 and encoder 2 are installed in a wedding center. Camera 1 captures images and collects sounds of a wedding ceremony on the day of the wedding ceremony, and produces video and audio data. Encoder 2 encodes data produced by camera 1 into IP data (e.g., UDP (User Datagram Protocol)/IP data according to a predetermined format), and sends the encoded data through IP network 8, to which encoder 2 is connected, to distribution server 4.

Call processing server 6 performs a call processing process for connecting encoder 2 to IP network 8. For example, for encoder 2 to connect to IP network 8 according to SIP (Session Initiation Protocol), call processing server 6 operates as an SIP server.

Call processing server 6 also performs a call processing process for connecting portable terminals 10₁, 10₂ to IP network 8 through telephone line network 9. For example, if portable terminals 10₁, 10₂ requests the network system to start distributing data, then call processing server 6 requests authentication server 3 to authenticate portable terminals 10₁, 10₂. If the authentication is successful, then call processing server 6 performs a call processing process for portable terminals 10₁, 10₂.

Authentication server 3 authenticates portable terminals 10₁, 10₂ in response to an authentication request from call processing server 6.

With portable terminals 10₁, 10₂ being connected to IP network 8 by the call processing process performed by call processing server 6, distribution server 4 distributes IP data that have been sent from encoder 2 through IP network 8 to portable terminals 10₁, 10₂ through IP network 8.

GW 7 converts the IP data distributed from distribution server 4 toward portable terminals 10₁, 10₂ into line switching data (e.g., 64 kbps unlimited digital data), and sends the line switching data through telephone line network 9 to portable terminals 10₁, 10₂.

GW 7 also has a function to detect a signal representing the start or end of transmission of a message, sent from portable terminals 10₁, 10₂. Furthermore, GW 7 has a function to send a message from portable terminals 10₁, 10₂ through IP network 8 to storage server 5 after it has received a signal representing the start of transmission of a message, sent from portable terminals 10₁, 10₂ until it receives a signal representing the end of transmission of the message.

With portable terminals 10₁, 10₂ being connected to IP network 8 by the call processing process performed by call processing server 6, if a message of video and audio contents is sent from portable terminals 10₁, 10₂ to IP network 8 in response to data distributed from distribution server 4, then storage server 5 stores the sent message.

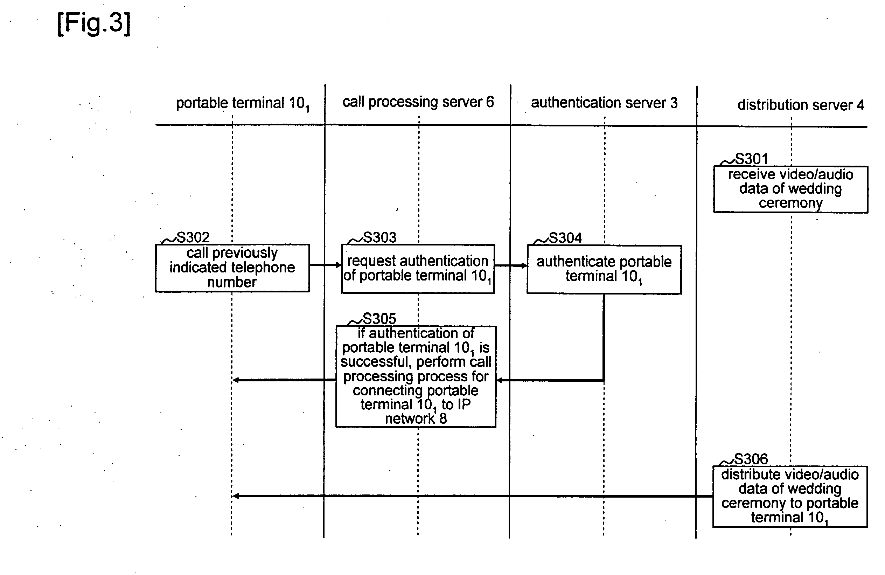

More specifically, as shown in Fig. 3, storage server 5 has receiver 51 for receiving a message sent from portable terminals 10₁, 10₂ and transmitted from GW 7 through IP network 8, and storage unit 52 for storing the message received by receiver 51.

Storage server 5 also has transmitter 53 for transmitting a message stored in storage unit 52 to IP network 8 and display unit 54 for displaying the message stored in storage unit 52. Therefore, storage server 5 can send a message stored in storage unit 52 through IP network 8 to a display means such as a monitor, not shown, in a wedding center, for the display means to display the message. If storage server 5 is installed in a wedding center, it can display by itself a message stored in storage unit 52.

Portable terminals 10₁, 10₂ have general TV telephone functions. Specifically, portable terminals 10₁, 10₂ has a function to decode video and audio data received from a party which they are communicating with through telephone line network 9, and output the decoded video and audio data, and a function to encode video and audio data produced by capturing images and collecting sounds of the user, and send the encoded video and audio data to a party which they are communicating with through telephone line network 9.

Consequently, portable terminals 10₁, 10₂ can decode video and audio data distributed from distribution server 4 and output the decoded video and audio data as images and sounds, and can encode a video and audio message in response to data distributed from distribution server 4 and send the encoded message to storage server 5.

Operation of the network system shown in Fig. 1 for providing a data distribution service and a message uploading service will be described below.

Initially, preliminary arrangements between the users of portable terminals 10₁, 10₂ and the system administrator (e.g., the operation manager of the wedding center) are made as follows:
First, the system administrator notifies the users of portable terminals 10₁, 10₂ of the following information (1) through (3). The notification may be sent by any desired method, e.g., a post card, electronic mail, or the like.
   (1) a time zone in which the distribution service can be used within the time zone in which the wedding ceremony is carried out, i.e., a time zone in which the connection of portable terminals 10₁, 10₂ is effective;
   (2) a calling number (e.g., 03-1234-5678) to be called to request the start of transmission of data for using the distribution service on the day of the wedding ceremony; and
   (3) a signal (e.g., a PB (Push Button) signal such as a DTMF (Dial Tone Multi-Frequency) signal or the like) to be sent as representing the start or end of transmission of a message for using the message uploading service.

If the users of portable terminals 10₁, 10₂ want to use the distribution service and the uploading service, they notify the system administrator of the telephone numbers of their portable terminals, and tell that they are going to use the services. The notification may be sent by any desired method, e.g., a post card, electronic return mail, or the like.

It is assumed that the user of portable terminal 10₁ notifies the system administrator of the telephone number (e.g., 090-1234-5678) of portable terminal 10₁, and tells that it is going to use the distribution service and the uploading service.

The system administrator registers the telephone number of portable terminal 10₁ and the effective connection time zone in which the connection of portable terminal 10₁ is effective. The system administrator also registers the telephone number of portable terminal 10₁ as the telephone number of the data distribution destination in distribution server 4 and call processing server 6.

The preliminary arrangements are now finished.

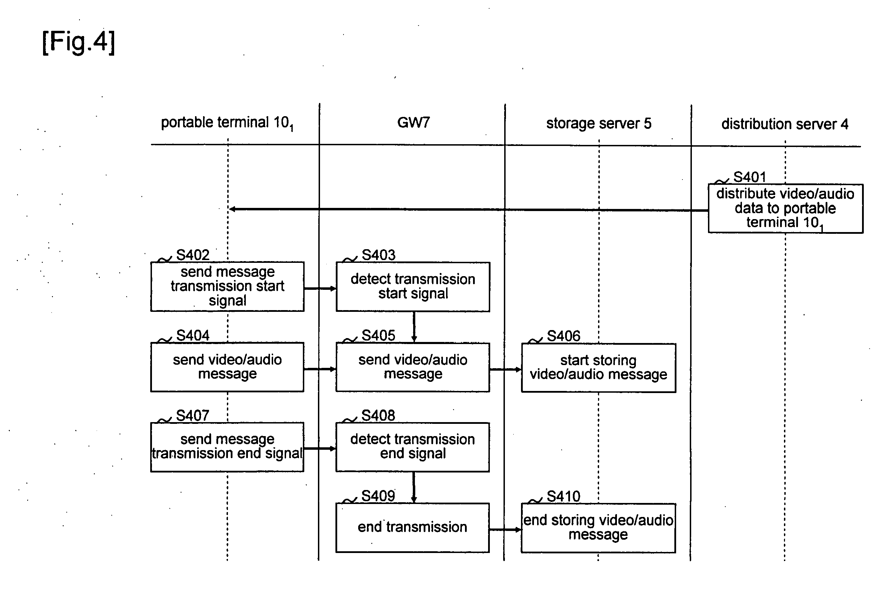

Processing sequences for the user of portable terminal 10₁ to use the distribution service and the uploading service on the day of a wedding ceremony will be described below with reference to flowcharts shown in Figs. 3 and 4.

First, a processing sequence for the user of portable terminal 10₁ to use the data distribution service will be described below with reference to the flowchart shown in Fig. 3.

As shown in Fig. 3, on the day of the wedding ceremony, video and audio data produced by capturing images and collecting sounds of the wedding ceremony with camera 1 are encoded by encoder 2 into IP data according to a predetermined format. After encoder 2 is connected to IP network 8 by according to a call processing process performed by call processing server 6, the data are sent from encoder 2 through IP network 8 to distribution server 4 (step 301). For example, if portable terminal 10₁ as the data distribution destination is a portable TV telephone terminal, then encoder 2 encodes the video data into data according to MPEG-4 (Moving Picture Experts Group-4) or MPEG-2, and encodes the audio data into data according to AMR (Advanced Multi-Rate CODEC).

In the previously indicated effective connection time zone for portable terminal 10₁, the user of portable terminal 10₁ calls the previously indicated telephone number (e.g., 03-1234-5678) using portable terminal 10₁ in order to request the start of distribution of the data of the wedding ceremony (step 302).

Call processing server 6 requests authentication server 3 to authenticate portable terminal 10₁ which has made a call in step 302 (step 303).

In response to the authentication request from call processing server 6, authentication server 3 confirms whether the telephone number (e.g., 090-1234-5678) as the identification number of portable terminal 10₁ is in agreement with the pre-registered telephone number or not, and whether the time at which portable terminal 10₁ has made the call is in agreement with the range of the pre-registered effective connection time zone or not, and authenticate portable terminal 10₁ (step 304). The authentication of portable terminal 10₁ by authentication server 3 is successful if either one of the telephone number and the effective connection time zone of portable terminal 10₁ is in agreement.

If authentication server 3 authenticates portable terminal 10₁ successfully, then call processing server 6 performs a call processing process for connecting the uplink and downlink of portable terminal 10₁ to IP network 8 through telephone line 9 and GW 7 (step 305).

Thereafter, distribution server 4 distributes the data of the wedding ceremony from IP network 8 through the downlink of portable terminal 10₁ to portable terminal 10₁ (step 306). At this time, GW 7 converts the data distributed from distribution server 4 to portable terminal 10₁ into line switching data, and sends the line switching data through telephone line network 9 to portable terminal 10₁.

The user of portable terminal 10₁ is thus able to effectively utilize the downlink of portable terminal 10₁ to browse the video and audio data of the wedding ceremony in real time. At this time, stuffing data according to ITU-T Recommendations H.223 is flowing through the uplink of portable terminal 10₁.

A processing sequence for the user of portable terminal 10₁ to use the message uploading service will be described below with reference to the flowchart shown in Fig. 4.

It is assumed that while the data of the wedding ceremony are being sent from distribution server 4 to portable terminal 10₁ (step 401) the user of portable terminal 10₁ is to send a message (celebration message or the like) in response to the data.

The user of portable terminal 10₁ sends a transmission start signal representing the start of transmission of a message through the uplink of portable terminal 10₁ (step 402), and then sends a message of video and audio contents produced by capturing images and collecting sounds with portable terminal 10₁, through the uplink of portable terminal 10₁ (step 404). The transmission start signal is a DTMF signal (e.g., PB sounds of 12345) or the like as described above.

If GW 7 detects the transmission start signal sent from portable terminal 10₁ (step 403), then GW 7 sends the message that is sent from portable terminal 10₁ subsequently to the transmission start signal, through IP network 8 to storage server 5 (step 405). Storage unit 52 of storage server 5 starts storing the message sent from GW 7 through IP network 8 (step 406).

To end the transmission of the message, the user of portable terminal 10₁ sends a transmission end signal representing the end of transmission of the message through the uplink of portable terminal 10₁ (step 407). The transmission end signal is a DTMF signal (e.g., PB sounds of 67890) or the like as described above.

If GW 7 detects the transmission end signal sent from portable terminal 10₁ (step 408), then GW 7 ends transmitting the message to storage server 5 (step 409), and storage unit 52 of storage server 5 ends storing the message (step 410).

The user of portable terminal 10₁ is thus able to effectively utilize the uplink of portable terminal 10₁ to upload the message of video and audio contents.

Subsequently, transmitter 53 of storage server 5 may send the message stored in storage unit 52 through IP network 8 to the display means such as a monitor, not shown, installed in the wedding center for the display means to display the message at a predetermined time (e.g., at a time for presenting celebration telegrams in the wedding ceremony). Alternatively, if storage server 5 is installed in the wedding center, display unit 54 may display the message stored in storage unit 52 at a predetermined time.

In the present embodiment, the distribution of data of a wedding ceremony has been described by way of example. However, the present invention is not limited to the illustrated embodiment, but may be configured to distribute data of events other than wedding ceremonies (e.g., celebrations, exhibitions, etc.).

In the present embodiment, the distribution of video and audio data to portable terminals 10₁, 10₂ has been described by way of example. However, the present invention is not limited to the illustrated embodiment, but may be configured to distribute only video data or only audio data in response to a request from portable terminal 10₁.

In the present embodiment, the uploading of a message of video and audio contents to storage server 5 has been described by way of example. However, the present invention is not limited to the illustrated embodiment, but may be configured to upload a message of only video data or audio contents.

In the present embodiment, the distribution of data to portable terminals 10₁, 10₂ has been described by way of example. However, the present invention is not limited to the illustrated embodiment, but may be configured to distribute data to an information terminal such as a stationary personal computer or the like. The information terminal as a distribution destination needs to have the same functions as portable terminal 10₁.

In present embodiment, the real-time distribution of video and audio data as live data has been described by way of example. However, the present invention is not limited to the illustrated embodiment, but may be configured to store data in a storage unit, not shown, in distribution server 4 and distribute the stored data. For example, data of moving picture contents representing an advertisement of a wedding center may be stored in distribution server 4, and the stored data may be distributed to the portable terminals of users who are looking for a wedding center. Alternatively, distribution server 4 may store movie data and distribute the stored data. When data stored in distribution server 4 are distributed, the user of a portable terminal as a distribution destination may send a signal representing the start of transmission of a message while browsing the data, and may upload the message subsequently to the signal.

In present embodiment, portable terminals 10₁, 10₂ are connected to IP network 8 through telephone line network 9 and unlimited digital data of telephone line network 9 are distributed to portable terminals 10₁, 10₂ by way of example. However, the present invention is not limited to the illustrated embodiment, but may be configured to connect portable terminals 10₁, 10₂ directly to IP network 8. In this case, a calling number to be called when portable terminals 10₁, 10₂ request the start of distribution of data is not the telephone number described above, but is a number such as a URL (including an SIP URL) or the like on IP network 8. Identification numbers of portable terminals 10₁, 10₂ which authentication server 3 refers to for authenticating portable terminals 10₁, 10₂ are mail addresses or the like on IP network 8.

In present embodiment, portable terminal 10₁ which has requested the distribution of data becomes a distribution destination. However, the present invention is not limited to the illustrated embodiment, but may be configured to employ portable terminal 10₂ as a distribution destination, which is different from portable terminal 10₁ which has requested the distribution of data. In this case, the user of portable terminal 10₁ notifies in advance the system administrator of not only the telephone number of portable terminal 10₁, but also the telephone number of portable terminal 10₂ that serves as a data distribution destination. The telephone number of portable terminal 10₂ is pre-registered in distribution server 4, call processing server 6, etc. by the system administrator as the telephone number of the data distribution destination. When the user of portable terminal 10₁ requests the distribution of data, authentication server 3 authenticates portable terminal 10₁. If the authentication is successful, then call processing server 6 performs a call processing process for connecting portable terminal 10₂ to IP network 8. Thereafter, distribution server 4 distributes the data through IP network 8 to portable terminal 10₂. In this case, the user of portable terminal 10₂ as a distribution destination sends a signal representing the start of transmission of a message while browsing the data, and uploads the message subsequently to the signal.

In present embodiment, only one camera 1 is employed by way of example. However, the present invention is not limited to the illustrated embodiment, but may be configured to switch between a plurality of cameras according to a switching signal such as a DTMF signal (PB sounds) from portable terminals 10₁, 10₂. In this case, distribution server 4 is arranged to be able to simultaneously receive video and audio data from the plurality of cameras. The users of portable terminals 10₁, 10₂ send switching signals for switching between the cameras. When GW 7 detects a switching signal sent from portable terminal 10₁, GW 7 instructs distribution server 4 through IP network 8 about which camera's data are to be distributed, based on the contents of the switching signal. In response to the instruction, distribution server 4 sends video and audio data from the camera indicated by GW 7 to GW 7 through IP network 8.

The present invention may employ one of the above configurations or may employ two or more of the above configurations.

According to the present invention, the system may be managed by a wedding center to provide the above services and charge the users for the services. Alternatively, the system may be managed by an ISP (Internet Service Provider) to provide the above services, charge the users for the services, and give some of the profits back to the wedding center. Further alternatively, the system may be managed by the telephone company to provide the above services, charge the users for the services, and give some of the profits back to the wedding center.

## Claims

1. A network system comprising:
an information terminal connectable to a network;
a distribution server for distributing video and/or audio data to said information terminal through said network while said information terminal is being connected to said network; and
a storage server for storing a message of video and/or audio contents when said message is sent from said information terminal to said network in response to the data distributed from said distribution server while said information terminal is being connected to said network.

2. The network system according to claim 1, further comprising:
an authentication server for authenticating said information terminal when said information terminal requests a start of distribution of the data, using at least one of a time at which said information terminal requests the start of distribution of the data and an identification number of said information terminal; and
a call processing server for performing a call processing process for connecting said information terminal to said network if said authentication server authenticates said information terminal successfully.

3. The network system according to claim 1, further comprising:
image capturing/sound collecting means installed in a predetermined location for capturing images and/or collecting sounds of said predetermined location to produce said data;
wherein said distribution server distributes said data produced by said image capturing/sound collecting means through said network to said information terminal in real time.

4. The network system according to claim 1, further comprising:
a gateway device for sending said message from said information terminal through said network to said storage server after the gateway device has detected a signal representing a start of transmission of said message sent from said information terminal until the gateway device detects a signal representing an end of transmission of said message sent from said information terminal;
wherein said storage server has receiving means for receiving said message sent from said gateway device through said network, and storing means for storing said message received by said receiving means.

5. The network system according to claim 4, wherein said storage server also has transmitting means for sending said message stored by said storing means to said network.

6. The network system according to claim 4, wherein said storage server also has display means for displaying said message stored by said storing means.

7. The network system comprising:
a first information terminal and a second information terminal which are connectable to a network;
a distribution server for distributing video and/or audio data to said second information terminal through said network while said second information terminal which is designated as a distribution destination by said first information terminal is being connected to said network; and
a storage server for storing a message of video and/or audio contents when said message is sent from said second information terminal to said network in response to the data distributed from said distribution server while said second information terminal is being connected to said network.

8. The network system according to claim 7, further comprising:
an authentication server for authenticating said first information terminal when said first information terminal requests a start of distribution of the data to said second information terminal, using at least one of a time at which said first information terminal requests the start of distribution of the data and an identification number of said first information terminal; and
a call processing server for performing a call processing process for connecting said second information terminal to said network if said authentication server authenticates said first information terminal successfully.

9. The network system according to claim 7, further comprising:
image capturing/sound collecting means installed in a predetermined location for capturing images and/or collecting sounds of said predetermined location to produce said data;
wherein said distribution server distributes said data produced by said image capturing/sound collecting means through said network to said second information terminal in real time.

10. The network system according to claim 7, further comprising:
a gateway device for sending said message from said second information terminal through said network to said storage server after the gateway device has detected a signal representing a start of transmission of said message sent from said second information terminal until the gateway device detects a signal representing an end of transmission of said message sent from said second information terminal;
wherein said storage server has receiving means for receiving said message sent from said gateway device through said network, and storing means for storing said message received by said receiving means.

11. The network system according to claim 10, wherein said storage server also has transmitting means for sending said message stored by said storing means to said network.

12. The network system according to claim 10, wherein said storage server also has display means for displaying said message stored by said storing means.

13. A method of providing a data distribution service, comprising the steps of:
distributing video and/or audio data from a distribution server to an information terminal via a downlink through a network based on a request from said information terminal for starting distributing said video and/or audio data;
sending a message of video and/audio contents from said information terminal via an uplink through said network to a storage server in response to said data distributed from said distribution server; and
storing said message sent from said information terminal in said storage server:

14. The method according to claim 13, further comprising the steps of:
authenticating said information terminal with an authentication server when said information terminal requests a start of distribution of the data, using at least one of a time at which said information terminal requests the start of distribution of the data and an identification number of said information terminal; and
performing a call processing process with a call processing server for connecting said information terminal to said network if said authentication server authenticates said information terminal successfully;
wherein in said step of distributing the data to said information terminal, said distribution server distributes the data through said network to said information terminal while said information terminal is being connected to said network by said call processing server.

15. The method according to claim 13, further comprising the step of:
capturing images and/or collecting sounds of a predetermined location with image capturing/sound collecting means to produce said data;
wherein in said step of distributing the data to said information terminal, said distribution server distributes said data produced by said image capturing/sound collecting means through said network to said information terminal in real time.

16. The method according to claim 13, wherein in said step of sending said message to said storage server, said information terminal sends a signal representing a start of transmission of said message, sends said message, and sends a signal representing an end of transmission of said message, said method further comprising the step of:
sending, from a gateway device, said message sent from said information terminal through said network to said storage server after the gateway device has detected the signal representing the start of transmission of said message sent from said information terminal until the gateway device detects the signal representing the end of transmission of said message sent from said information terminal;
wherein in said step of storing said message, said storage server stores said message sent from said gateway device through said network.

17. The method according to claim 16, further comprising the step of:
sending said message stored by said storage server through said network to external display means.

18. The method according to claim 16, further comprising the step of:
displaying said message stored by said storage server on display means in said storage server.

19. A method of providing a data distribution service, comprising the steps of:
distributing video and/or audio data from a distribution server to a second information terminal, which is designated as a distribution destination by a first information terminal, via a downlink through a network based on a request from said first information terminal for starting distributing said video and/or audio data;
sending a message of video and/audio contents from said second information terminal via an uplink through said network to a storage server in response to said data distributed from said distribution server; and
storing said message sent from said second information terminal in said storage server.

20. The method according to claim 19, further comprising the steps of:
authenticating said first information terminal with an authentication server when said first information terminal requests a start of distribution of the data to said second information terminal, using at least one of a time at which said first information terminal requests the start of distribution of the data and an identification number of said first information terminal; and
performing a call processing process with a call processing server for connecting said second information terminal to said network if said authentication server authenticates said first information terminal successfully;
wherein in said step of distributing the data to said second information terminal, said distribution server distributes the data through said network to said second information terminal while said second information terminal is being connected to said network by said call processing server.

21. The method according to claim 19, further comprising the step of:
capturing images and/or collecting sounds of a predetermined location with image capturing/sound collecting means to produce said data;
wherein in said step of distributing the data to said second information terminal, said distribution server distributes said data produced by said image capturing/sound collecting means through said network to said second information terminal in real time.

22. The method according to claim 19, wherein in said step of sending said message to said storage server, said second information terminal sends a signal representing a start of transmission of said message, sends said message, and sends a signal representing an end of transmission of said message, said method further comprising the step of:
sending, from a gateway device, said message sent from said second information terminal through said network to said storage server after the gateway device has detected the signal representing the start of transmission of said message sent from said second information terminal until the gateway device detects the signal representing the end of transmission of said message sent from said second information terminal;
wherein in said step of storing said message, said storage server stores said message sent from said gateway device through said network.

23. The method according to claim 22, further comprising the step of:
sending said message stored by said storage server through said network to external display means.

24. The method according to claim 22, further comprising the step of:
displaying said message stored by said storage server on display means in said storage server.
